# EUROPEAN PATENT APPLICATION

(11) **EP 0 747 890 A1**
(43) Date of publication of application: **11.12.1996**
(21) Application number: 96304109.0
(22) Date of filing: 05.06.1996
(51) Int. Cl.: G11B 5/60, G11B 21/21

(54) **Center rail slider for proximity recording**

(30) Priority: 06.06.1995 US 469213
(71) Applicant: SEAGATE TECHNOLOGY, INC., Scotts Valley, California 95066 (US)
(72) Inventor: Crane, Peter, Richfield, Minnesota 55423 (US); Chapin, Robert E., Burnsville, Minnesota 55337 (US)
(74) Representative: Sturt, Clifford Mark

(57) **Abstract**

A self-loading disc head slider (36) is configured for supporting a transducer (44) proximate a rotating disc. The transducer includes a slider body having a leading edge (50), a trailing edge (52) and first and second side edges (54, 56). First and second raised side rails (38, 40) extend from the leading edge toward the trailing edge and terminate prior to the trailing edge. The first and second raised side rails each form a bearing surface (57, 58) having a leading portion (59), a trailing portion (62) and a waist portion (60) therebetween. The waist portion is narrower than the leading and trailing portions. A subambient pressure cavity (64) is positioned between the first and second raised side rails. A raised cavity dam (66) extends from the first raised side rail to the second raised rail and is recessed from the bearing surfaces. A leading edge taper (70) extends from the first side edge to the second side edge and has a recess (74) along the cavity dam. A raised center rail (42) is positioned at the trailing edge of the slider body between the first and second side edges. The transducer is mounted on the raised center rail along the trailing edge of the slider body.

## Description

The present invention relates to the field of disc drive data storage devices. More specifically, the invention relates to transducer head assemblies within disc drive data storage devices.

Disc drives of the "Winchester" type are well known in the industry. Such devices use rigid discs coated with a magnetizable medium for storage of digital information in a plurality of circular, concentric data tracks. This information is written to and read from the discs using a transducing head carried on a head gimbal assembly (HGA) mounted on an actuator mechanism. The actuator mechanism includes a track accessing arm which moves the head from track to track across the surface of the disc under control of electronic circuitry. The discs are mounted for rotation on a spindle motor which causes the discs to spin and the surface of the discs to pass under the respective heads.

The head gimbal assembly includes a hydrodynamic bearing slider and a gimbal. The gimbal is positioned between the slider and the track accessing arm to provide a resilient connection that allows the slider to follow the topography of the disc. The gimbal includes a dimple that is in point contact with the slider. The dimple provides a pivot about which the slider can pitch and roll while following the topography of the disc.

A conventional catamaran slider includes a pair of side rails that are positioned along the slider's edges and are disposed about a recessed area to form a pair of hydrodynamic bearing surfaces. As the disc rotates, the disc drags air under the slider and along the bearing surfaces in a direction approximately parallel to the tangential velocity of the disc. As the air passes beneath the side rails, skin friction on the bearing surfaces causes the air pressure between the disc and the bearing surfaces to increase which creates a hydrodynamic lifting force that causes the slider to lift and fly above the disc surface.

The track accessing arm includes a load beam which carries the head gimbal assembly. The load beam provides a preload force which counteracts the hydrodynamic lifting force from the slider as the head gimbal assembly flies across the disc surface. The preload force and the hydrodynamic lifting force reach an equilibrium based upon the hydrodynamic properties of the slider and the speed of rotation of the disc.

Negative pressure air bearing (NPAB) sliders further include a cross rail which extends between the side rails and is positioned near the slider's leading edge. The cross rail forms a subambient pressure region trailing the cross rail, between the side rails. The air expands in this cavity with a consequent decrease in pressure. The pressure in the cavity may become subambient, in which the integral of pressure over the cavity area provides a self-loading force on the slider which forces the slider toward the disc surface. The self-loading force counteracts the hydrodynamic lifting force developed along the side rails. The counteraction between the positive and negative forces reduces flying height sensitivity with respect to disc velocity and increases air bearing stiffness.

The disc tangential velocity is greater at its outer diameter than at its inner diameter. The magnitude of positive pressure developed along the side rails increases with the sliding velocity. However, the magnitude of the self-loading force also increases with the sliding velocity. The increasing self-loading force inhibits the increasing positive pressure from forcing the slider away from the disc. Therefore, the equilibrium clearance of an NPAB slider is less dependent on the sliding velocity than a conventional air bearing slider.

An NPAB slider is also stiffer than the conventional air bearing slider. This effect is due to relatively large surface areas that are required to support the slider at a specified clearance. The surface area of the self-loading bearing must be larger than that of a conventional bearing, to provide adequate lifting force to resist the self-loading force as well as the preload force applied by the load beam.

It has been found that the advantages of the NPAB slider are maximized by making the negative pressure cavity as large as possible. Warner et al. U.S. Patent No. 4,475,135 discloses a self-loading magnetic head air bearing slider having a pair of side rails and a cross rail which is positioned at its leading edge. The cross rail lies in a plane defined by the side edges and includes a full width taper at the leading edge. The full width taper provides a faster liftoff from the disc surface.

Although the slider disclosed by Warner et al. maximizes the area of the subambient pressure cavity, it also has undesirable features. First, the full width leading edge tends to collect wear particles and similar debris. This debris sheds occasionally and is dragged between the slider and the disc, causing increased wear to both the air bearing surface and the disc surface. Second, the cross rail and the leading edge taper cause the slider to fly with an unusually high pitch angle. A very high pitch angle degrades the stiffness of the air bearing.

As disc drives become more compact for applications in smaller and more portable equipment, rotary actuators are increasingly employed for the track accessing arm. Further, the designer is motivated to use a shorter actuator pivot arm to make the disc drives even more compact. Rotary actuators cause the geometric orientation between the disc rotation tangent and the slider's center line to change as the arm moves the slider between the inside and outside data tracks on the disc. This is known as skew or skew angle. Large skew angles make flying height control more difficult.

Flying height is viewed as one of the most critical parameters of contact and non-contact recording. As the average flying height of the slider decreases, the transducer achieves greater resolution between the individual data bit locations on the disc. Therefore, it is desirable to have the transducers fly as close to the disc as possible. Flying height is preferably uniform regardless of variable flying conditions, such as tangential velocity variation from inside to outside tracks, lateral slider movement during seek, and bearing skew angles.

In the past, the transducer has been positioned on the trailing edge of the side rails. Because the slider flies with a pitch angle in which the leading edge flies at a greater distance than the trailing edge, the transducer is as close to the disc surface as possible when positioned at the trailing edge.

Transducers have also been mounted on a small mounting pad positioned on the center line of the slider at the trailing edge. In this position, there is more room on the trailing end of the slider for fabrication of the transducer and its terminals, relative to the position in which the transducer is mounted off to the side of the trailing end, adjacent the side rails. A disadvantage of central transducer mounting is that when the slider rolls about its pivot point, spacing of a corner of the trailing edge becomes smaller than the spacing of the transducer. This reduces the minimum flying height of the slider and causes increased risk of slider contact with the disc surface.

Slider roll may be due to several factors. The first factor is manufacturing errors in the gimbal which attaches the slider to the track accessing arm. The second factor is dynamic forces applied to the air bearing slider by the track accessing arm during track accessing. The third factor is varying skew angles of the disc rotation tangent relative to the slider center line. When the slider flies at skew with respect to the direction of air flow, unequal pressure distribution develops between the first and second side rails. This causes the slider to fly with one rail closer to the disc surface than the other rail. As a result, the probability of contact with the disc surface at this corner increases. Therefore, the reliability of the disc drive is reduced.

There is a continuing effort to develop air bearing sliders that carry a transducer as close to the disc surface as possible with a constant flying height regardless of the varying flying conditions such as disc velocity and skew angle.

Finally, reference is made to U.S. patent application numbers 08/315,282, 08/380,837 and 08/118,004.

The self-loading disc head slider of the present invention is configured for supporting a transducer proximate a rotating disc. The transducer includes a slider body having a leading edge, a trailing edge and first and second side edges. First and second raised side rails extend from the leading edge toward the trailing edge and terminate prior to the trailing edge. The first and second raised side rails each form a bearing surface having a leading portion, a trailing portion and a waist portion therebetween. The waist portion is narrower than the leading and trailing portions. A subambient pressure cavity is positioned between the first and second raised side rails. A raised cavity dam extends from the first raised side rail to the second raised rail and is recessed from the bearing surfaces. A leading edge taper extends from the first side edge to the second side edge and has a recess along the cavity dam. A raised center rail is positioned at the trailing edge of the slider body between the first and second side edges. The transducer is mounted on the raised center rail along the trailing edge of the slider body.

The slider of the present invention has a unique combination of hydrodynamic features that provides desirable flying characteristics for proximity recording in which the transducer "flies" only 0 to 0.3048 mm above the disc surface. With proximity recording, the trailing edge of the slider may actually contact the surface roughness of the disc. The truncated side rails reduce pitch stiffness to aid in proximity recording. The slider therefore requires less force to pitch forward as the trailing edge of the slider contacts the disc surface, resulting in less wear to the slider and the disc surface.

The slider of the present invention can also be used for traditional, non-contact recording with flying heights greater than 0.3 mm. A ratio of the maximum to minimum rail width can be adjusted to provide a desired fly height sensitivity to skew. The ratio can be reduced to provide a "hump" in the fly height profile from the outer diameter to the inner diameter of the disc so that the fly height at the outer diameter is equal to the fly height at the inner diameter. In some embodiments, it is desirable to have the fly height at the outer diameter be slightly greater than the fly height at the inner diameter and the ratio is increased accordingly.
Embodiments of the present invention will now be described with reference to the accompanying drawings, of which:

Figure 1 is a top plan view of a disc drive data storage device in which the present invention is useful.

Figure 2 is a perspective view of a load beam coupled to a head gimbal assembly in accordance with the present invention.

Figure 3 is an end view of the load beam and head gimbal assembly of Figure 2.

Figure 4 is a bottom plan view of a center rail slider according to the present invention.

Figure 5 is a bottom plan view of an alternative center rail according to the present invention.

Figure 6 is a bottom plan view of a center rail slider according to an alternative embodiment of the present invention.

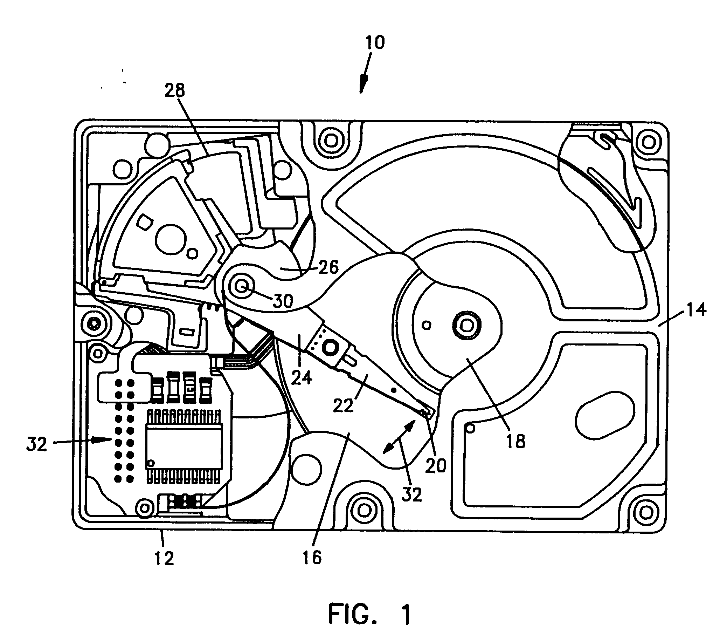

Figure 1 is a top plan view of a typical disc drive 10 in which the present invention is useful. Disc drive 10 includes a housing base 12 and a top cover 14. The housing base 12 is combined with top cover 14 to form a sealed environment to protect the internal components from contamination by elements from outside the sealed environment.

Disc drive 10 further includes a disc pack 16 which is mounted for rotation on a spindle motor (not shown) by a disc clamp 18. Disc pack 16 includes a plurality of individual discs which are mounted for co-rotation about a central axis. Each disc surface has an associated head gimbal assembly (HGA) 20 which is mounted to disc drive 10 for communicating with the disc surface. In the example shown in Figure 1, HGA's 20 are supported by load beam flexures 22 which are in turn attached to head mounting arms 24 of an actuator body 26. The actuator shown in Figure 1 is of the type known as a rotary moving coil actuator and includes a voice coil motor (VCM), shown generally at 28. Voice coil motor 28 rotates actuator body 26 with its attached heads 20 about a pivot shaft 30 to position heads 20 over a desired data track along an arcuate path 32. This allows electronic circuitry 32 to read back or write information at desired locations on disc 16. While a rotary actuator is shown in Figure 1, the present invention is also useful in disc drives having other types of actuators, such as linear actuators.

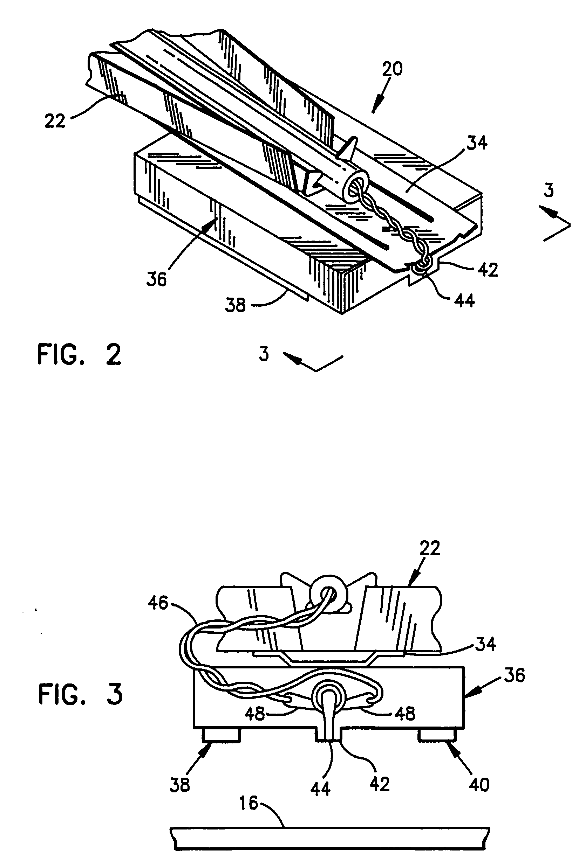

Figures 2 and 3 show head gimbal assembly 20 in greater detail. Figure 2 is a perspective view of head gimbal assembly 20 supported by load beam flexure 22. Figure 3 is an end view of head gimbal assembly 20 taken along line 3-3 of Figure 2. Load beam 22 supplies a preload force which urges head gimbal assembly 20 toward the disc surface. Assembly 20 includes a gimbal 34 and a slider 36. Gimbal 34 is positioned between slider 36 and load beam 22 to provide a resilient connection that allows the slider to follow the topography of the disc. Slider 36 is connected to gimbal 34 in a known manner, such as with an adhesive. Gimbal 34 includes a dimple (not shown) that is in point contact with slider 36. The dimple provides a pivot about which slider 36 can pitch and roll while following the topography of disc 16.

Slider 36 includes first and second side rails 38 and 40, center rail 42 and transducer 44. Transducer 44 is mounted to a trailing end of center rail 42. Transducer 44 is electrically coupled to leads 46 at bonding pads 48. Transducer 44 communicates with individual bit positions on the surface of disc 16 as they pass beneath slider 36. Transducer 44 can include a thin film or magnetoresistive magnetic head, for example. The number of conductors and bonding pads depends upon the number of conductors required for the particular head that is carried by slider 36.

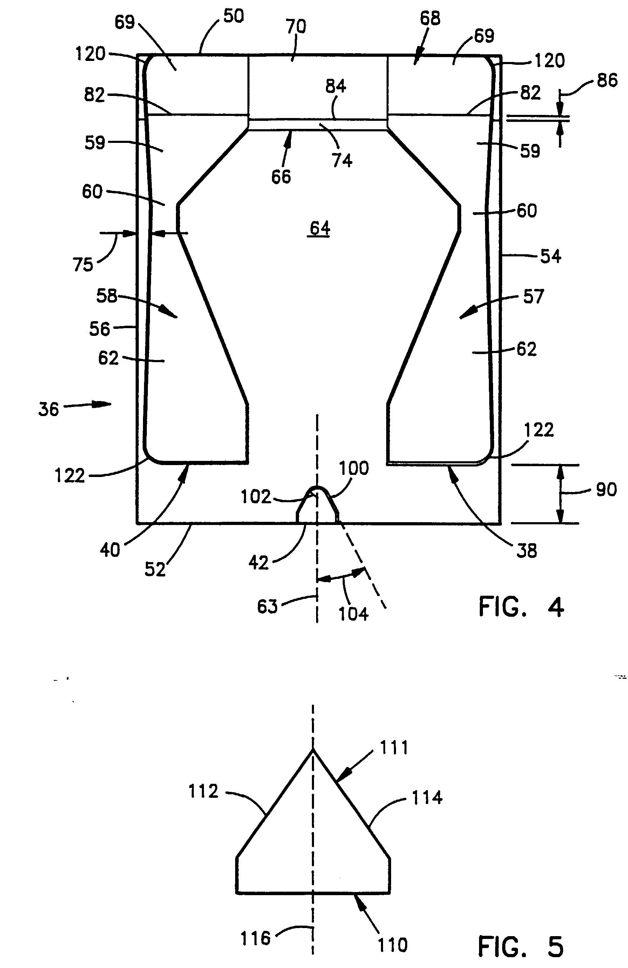

Figure 4 is a bottom plan view of slider 36, as seen from the surface of disc 16. Slider 36 has a unique combination of hydrodynamic features that provides desirable flying characteristics for proximity recording in which the transducer flies at about 0 to about 0.3 mm above the surface of disc 16. In some embodiments, the transducer actually contacts the surface roughness of disc 16. The slider can also be used for recording at flying heights that are greater than 0.3 mm.

Slider 36 has a leading edge 50, a trailing edge 52 and first and second side edges 54 and 56. First and second side rails 38 and 40 extend from leading edge 50 toward trailing edge 52 and terminate prior to the trailing edge. First and second side rails 38 and 40 form bearing surfaces 57 and 58, respectively. Bearing surfaces 57 and 58 have a leading portion 59, a waist portion 60 and a trailing portion 62. Waist portion 60 is narrower than leading and trailing portions 59 and 62. Center rail 42 is positioned at trailing edge 52 and is centered along a longitudinal center line 63 of slider 36. In one embodiment, center rail 42 is coplanar with bearing surfaces 57 and 58.

Subambient pressure cavity 64 is positioned between first and second side rails 38 and 40. A cavity dam 66 extends from first side rail 38 to second side rail 40 and is recessed from bearing surfaces 57 and 58.

As disc 16 rotates, the disc drags air under slider 36 and along bearing surfaces 57 and 58 in a direction generally parallel to the tangential velocity of the disc. As the air passes beneath side rails 38 and 40, skin friction on bearing surfaces 57 and 58 causes the air pressure between disc 16 and the bearing surfaces to increase which creates a hydrodynamic lifting force that causes slider 36 to lift and fly above the disc surface. As the air passes over cavity dam 66, the air expands into subambient pressure cavity 64 with a consequent decrease in pressure. The pressure in cavity 64 may become subambient, in which case the integral of pressure over the cavity area provides a self-loading force on slider 36 which forces the slider toward the disc surface. The self-loading force counteracts the hydrodynamic lifting force developed along side rails 38 and 40.

Slider 36 has a full-width leading edge taper 68 which extends from first side edge 54 to second side edge 56. Leading edge taper 68 extends across the full width of slider 36 to direct more air beneath bearing surfaces 57 and 58 during takeoff, which causes slider 36 to lift off the disc surface at lower speeds. This reduces the time during which slider 36 is in contact with the disc surface and therefore reduces wear on bearing surfaces 57 and 58 and on the disc surface.

Leading edge taper 68 extends along the leading edges of side rails 38 and 40 and cavity dam 66. Leading edge taper 68 includes side rail taper portions 69 and recessed taper portion 70. Side rail taper portions 69 extend from leading edge 50 to an intersection 82 with bearing surfaces 57 and 58. Recessed taper portion 70 extends from leading edge 50 to an intersection 84 with a planar portion 74 of cavity dam 66.

Intersection 82 and intersection 84 have an offset 86 from one another of approximately 2.54 µm. In one embodiment, side rail taper portions 69 form a 0.008 radian angle with bearing surfaces 57 and 58. Likewise, recessed taper portion 70 forms a 0.008 radian angle with planar portion 74.

Recessed taper portion 70 and planar portion 74 of cavity dam 66 are recessed from side rail taper portions 69 and bearing surfaces 57 and 58 by approximately 1.0 µm (39 microinches). The existence of planar portion 74 assists in absorbing process variations during fabrication to ensure that the recess has a consistent depth. The recess minimizes debris collection at leading edge 50 and reduces pitch angle. When slider 36 slides with a positive pitch, leading edge 50 flies at a greater distance from the disc surface than trailing edge 52. Pitch angle is a measurement of the degree of positive pitch. A very high pitch angle degrades the stiffness of the air bearing. Recessed taper portion 70 reduces the pitch angle and thereby increases stiffness of the bearing, but maintains the advantages of fast takeoff provided by the full-width leading edge taper. Various aspects of leading edge taper 68 and recessed taper portion 70 are discussed in greater detail in U.S. Patent No. 5,210,666 which is hereby incorporated by reference. The depth of the recess may be varied to achieve various flying characteristics.

Side rails 38 and 40 have an "hourglass" shape in which waist portion 60 is narrower than leading portion 59 and trailing portion 62. The hourglass shape reduces flying height sensitivity to skew angle. Slider skew occurs in disc drives having rotary actuators. At certain disc radii, rotation of the actuator causes slider 36 to fly with its center line 63 at skew with respect to the direction of air flow, which causes unequal pressure distributions to develop along side rails 38 and 40. This causes slider 36 to roll, resulting in one rail being closer to the disc surface than the other rail.

The hourglass shapes maintain a near constant air bearing surface area and pressure distribution as slider 36 flies at varying skew angles with respect to air flow. As a result, the hourglass shapes minimize slider roll about slider center line 63. The hourglass shapes also maximize slider stiffness by maximizing the counteraction between positive and subambient pressure. The surface area of bearing surfaces 57 and 58 is largest near the ends of the rails and smallest near the center of the rails. This maximizes positive pressure near the ends of the rails while maximizing the area of subambient pressure cavity 64 near the center of slider 36. The hourglass shapes and resulting pressure profiles are discussed in greater detail in U.S. Patent No. 5,062,017, which is hereby incorporated by reference.

The hourglass shapes of the side rails can be formed with steps that have a depth substantially equal to the depth of subambient pressure cavity 64 or can be formed by relatively shallow steps having a depth of about 0-2.0 µm, as described in U.S. Patent No. 5,062,017.

The hourglass shapes of side rails 38 and 40 can be adjusted to achieve a particular skew sensitivity. The tangential velocity of the disc is greater at its outer diameter than at its inner diameter. As a result, positive pressure along side rails 38 and 40 is greater when slider 36 is positioned at the outer diameter which causes the slider to fly at a greater distance from the disc surface than when positioned at the inner diameter. The hourglass shapes of side rails 38 and 40 can be adjusted to cause the flying height at the outer diameter to approach the flying height at the inner diameter by varying skew sensitivity. The hourglass shapes can be defined by an "hourglass ratio" of a maximum width, along leading and trailing portions 59 and 62, to a minimum width, along waist portion 60. A larger hourglass ratio results in a lower skew sensitivity. In preferred embodiments, the hourglass ratio ranges from about 1.0 to about 7.0. In most preferred embodiments, the hourglass ratio ranges from about 2.5 to about 4.0

Reducing the hourglass ratio, and thereby increasing skew sensitivity, creates a "hump" in the fly height profile as the slider moves from an inner diameter of the disc to an outer diameter of the disc. The hump results from the slider being aligned with the direction of air flow at a middle diameter and being at skew at the inner and outer diameters, which lowers the fly height at the inner and outer diameters. Introducing a hump in the fly height profile moves the fly height at the outer diameter down to the fly height at the inner diameter of the disc. A typical hump may be 0.0127 mm with an hourglass ratio of 1.5.

The hourglass shapes also have a transverse offset 75 at waist portion 60 with respect to first and second side edges 54 and 56. The amount of transverse offset controls slider roll about slider center line 63. The transverse offset can range from no offset, in which the outer edge of each side rail is straight and the inside edge is "crooked," to a full offset, in which the outside edge is crooked and the inside edge is straight. In one embodiment, waist portion 60 is offset by about 5 - 10.16 µm, The transverse offset is discussed in U.S. Serial No. 08/315,282, filed September 29, 1994, which is hereby incorporated by reference.

Side rails 38 and 40 are truncated a distance 90 from trailing edge 52 such that the transducer mounted on center rail 42 is the closest point to the disc surface. Distance 90 is selected such that the trailing edges of side rails 38 and 40 fly at approximately 0.0254 mm higher than the trailing edge of center rail 42, for example. Distance 90 depends on several operating factors, such as pitch angle and disc speed. In one embodiment, distance 90 ranges from 12.7 - 38.1 µm and preferably ranges from 17.7 - 25.4 µm. Truncating side rails 38 and 40 prior to trailing edge 52 allows a relatively large roll angle without risking contact by the trailing edges of side rails 38 and 40, as discussed in U.S. Patent No. 5,267,109, which is hereby incorporated by reference.

Truncating the side rails prior to the trailing edge reduces the pitch stiffness of slider 36 since the clearance of bearing surfaces 57 and 58 is generally higher due to the reliefs at the traditionally low clearance areas near the trailing edge. Pitch stiffness is further reduced by the truncated bearing length, which offers a shorter lever arm for pressure responses to act upon.

The reduced pitch stiffness has unique advantages in proximity recording. With reduced pitch stiffness, less force is required to pitch the slider forward as the trailing edge of the slider contacts the surface roughness of the disc. This reduces wear on center rail 42 and on the surface of the disc.

As mentioned above, the transducer is mounted to the trailing edge of center rail 42. Center rail 42 has a rounded leading edge 100 which is formed by two relatively straight segments that intersect through a curved apex at slider center line 63. The curved apex has a radius of curvature 102 of about 2.54 - 7.62 µm. The straight segments form an angle 104 with center line 63 of about 30-60 degrees. Leading edge 100 can have other shapes, such as a pointed shape. Figure 5 is a bottom plan view of an alternative center rail 110 having a pointed leading edge 111. Leading edge 111 is formed by segments 112 and 114 which intersect at slider center line 116. Center rail 110 is drawn out of scale in Figure 5 for clarity.

The slider shown in Figure 4 is a "50 Series" slider in which the overall dimensions of the slider are 50 percent of a typical slider. The hydrodynamic features shown in Figure 4 can also be used on a "30 Series" slider in which the dimensions of the slider are 30 percent of a typical slider. The following table provides the dimensions of the primary features of slider 36 for a 50 Series slider and a 30 Series slider:

| Feature | 50% Slider Dimension mm | 30% Slider Dimension mm |
|---|---|---|
| Slider Body Width | 0.160 | 0.099 |
| Slider Body Length | 0.200 | 0.120 |
| Taper Length (from leading edge) | 0.025 | 0.020 |
| Cavity Dam Length (from leading edge) | 0.033 | 0.025 |
| Air Bearing Surface Width | 0.155 | 0.097 |
| Side Rail Length | 0.178 | 0.097 |
| Rail Width Maximum | 0.046 | 0.041 |
| Rail Width Minimum | 0.0155 | 0.01 |
| Cavity Dam Width | 0.002 | 0.036 |
| Cavity Depth | 2.0-6.5 µm | 2.0-6.5 µm |
| Subambient Pressure Cavity Length | 0.170 | 0.097 |
| Waist Length | 0.01 | 0.005 |
| Center Rail Length | 0.0158 | 0.020 |
| Center Rail Width | 0.0175 | 0.020 |

The dimensions are provided as examples only and can be modified to suit a particular application or to achieve desired flying characteristics. The hydrodynamic features are scaled accordingly. The dimensions of certain features can also be varied to accommodate different preload forces and gimbal characteristics that are associated with reducing the slider size. For example, load beam flexure 22 (shown in Figure 2) exerts a preload force through gimbal 34 to slider 36 of about 2-7 grams for a 50 Series slider, and about 0-3 grams for a 30 Series slider.

In the embodiment shown in Figure 4, side rails 38 and 40 and center rail 42 are defined by ion milling to a depth of 2.0-6.5 µm. Side rails 38 and 40 have rounded leading corners 120 and rounded trailing corners 122. Rounded leading corners 120 have a radius of curvature of about 0.0127 mm. Rounded trailing corners 122 have a radius of curvature of about 0.0102 mm.

The unique combination of hydrodynamic features of the present invention shown in Figure 4 achieves desired flying characteristics for proximity recording in which the trailing edge of the slider may contact the surface roughness of the disc. The transducer is mounted on a center rail to reduce flying height sensitivity to slider roll. The truncated side rails reduce pitch stiffness such that less force is required to pitch the slider forward as the trailing edge of the slider contacts the disc surface. The truncated side rails also keep the transducer near the close point flying height for a wide range of roll angles. The side rails are hourglass shaped to reduce the flying height sensitivity to skew angle. The leading taper extends across the full width of the leading edge to improve takeoff performance, but is relieved 1.0 µm in a centrally etched area to reduce stiction with the disc surface, reduce debris collection, and reduce the flying pitch angle, thereby improving bearing stiffness and flying height sensitivity to altitude. The unique combination of hydrodynamic features strikes a balance between inconsistent flying characteristics and results in a slider having overall flying characteristics that are beneficial to proximity recording.

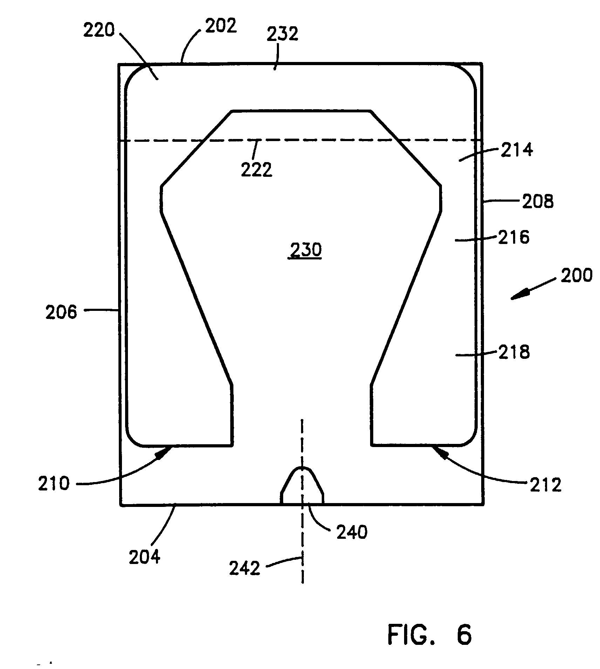

Figure 6 is a bottom plan view of a slider having an alternative leading edge configuration, according to the present invention. Slider 200 has a leading edge 202, a trailing edge 204 and first and second side edges 206 and 208. Slider 200 is a 30 Series slider having a width of 0.1 mm measured between side edges 206 and 208 and a length of 0.12 mm measured between leading and trailing edges 202 and 204.

First and second side rails 210 and 212 extend from leading edge 202 toward trailing edge 204 and terminate prior to the trailing edge by approximately 0.0254 mm. Side rails 210 and 212 have a leading portion 214, a waist portion 216 and a trailing portion 218. Waist portion 216 has a width of 7.62 µm and trailing portion has a width of 22.86 µm. Side rails 210 and 212 therefore have an hourglass ratio of 3.0.

A leading edge taper 220 extends across the full width of slider 200. Leading edge taper extends from leading edge 202 to an intersection 222 with leading portion 214 of side rails 210 and 212. Leading edge taper 220 has a length measured from leading edge 202 to intersection 222 of about 0.02 mm and forms and angle with leading portions 214 of about 0.008 radians.

A subambient pressure cavity 230 is positioned between first and second side rails 210 and 212. A cavity dam 232 is positioned at leading edge 202 and extends from first side rail 210 to second side rail 212. A center rail 240 is positioned at trailing edge 204 along a slider center line 242. Center rail 240 has a width of about 0.02 mm.

Subambient pressure cavity 230 extends forward along the slider body past intersection 222 and within the leading edge taper area. As a result, cavity dam 232 becomes recessed from the air bearing surfaces formed by side rails 210 and 212. In a preferred embodiment, subambient pressure cavity 230 extends within leading edge taper 220 (past intersection 222) by a distance that is sufficient to recess cavity dam 232 from the air bearing surfaces formed by side rails 210 and 212 by about 0.5-2.0 µm, and preferably about 1.0 µm. A separate fabrication step is not required to recess cavity dam 232. The fabrication of slider 200 is therefore simplified and less costly, as is described in greater detail in co-pending application of Ihrke et al., U.S. Serial No. 08/380,837, filed January 30, 1995, which is hereby incorporated by reference. The dimensions provided above are examples only and can be varied to suit a particular application or achieve desired flying characteristics.

With a disc speed of 9,000 RPM and a preload force of 0.5 grams (gmf), a computer model of the slider shown in Figure 6 in a 3.5 inch (88.9 mm) form factor disc drive developed a suction force within subambient pressure cavity 230 of 0.65 gmf at an inner diameter of the disc and 1.28 gmf at an outer diameter of the disc. The flying height was 0.061 mm at the inner diameter and 0.055 mm at the outer diameter. The pitch was 295-364 microradians.

Although the present invention has been described with reference to preferred embodiments, workers skilled in the art will recognize that changes may be made in form and detail without departing from the scope of the present invention.

## Claims

1. A self-loading disc head slider configured for supporting a transducer (44) proximate a rotating disc, characterised by the combination of:
a slider body (36) having a leading edge (50), a trailing edge (52) and first and second side edges (54, 56);
first and second raised side rails (38, 40) extending from the leading edge toward the trailing edge and terminating prior to the trailing edge, the first and second raised side rails each forming a bearing surface (57, 58) having a leading portion (59), a trailing portion (62) and a waist portion (60) therebetween, wherein the waist portion being narrower than the leading and trailing portions;
a subambient pressure cavity (64) positioned between the first and second raised side rails;
a raised cavity dam (66) which extends from the first raised side rail to the second raised side rail and is recessed from the bearing surfaces;
a leading edge taper (70) extending from the first side edge to the second side edge, wherein the leading edge taper has a recess along the cavity dam; and
a raised center rail (42) positioned at the trailing edge of the slider body between the first and second side edges, wherein the transducer is mounted on the raised center rail along the trailing edge of the slider body.

2. The self-loading disc head slider of claim 1 wherein:
the bearing surfaces have a maximum width along the leading and trailing portions and a minimum width along the waist portion, wherein a ratio of the maximum width to the minimum width is between substantially one and seven.

3. The self-loading disc head slider of claim 2 wherein the width ratio is between substantially 2.5 and 4.0.

4. The self-loading disc head slider of any one of claims 1 to 3 wherein:
the slider body has a central, longitudinal axis (63); and
the raised center rail is positioned along the central, longitudinal axis and has a leading edge which forms a 30-60 degree angle with the central, longitudinal axis.

5. The self-loading disc head slider of claim 4 wherein:
the raised center rail has a leading edge formed by two substantially straight segments which intersect at the central, longitudinal axis.

6. The self-loading disc head slider of claim 4 wherein:
the raised center rail has a leading edge formed by two segments which intersect through a curved apex at the central, longitudinal axis.

7. The self-loading disc head slider of claim 6 wherein the curved apex has a radius of curvature of about 1.0 to 3.0 mils.

8. The self-loading disc head slider as claimed in any preceding claim wherein the slider has a pitch angle with respect to the rotating disc and wherein:
the first and second raised side rails terminate at a distance (90) from the trailing edge for enabling the first and second raised side rails to be spaced from the disc at least 0.0254 mm greater than the transducer.

9. The self-loading disc head slider as claimed in any preceding claim wherein the first and second raised side rails terminate 12.7 - 38.1 µm from the trailing edge.

10. The disc head slider as claimed in any preceding claim, in which the cavity dam has a tapered surface (70) positioned at the leading edge and has a planar surface (74) extending from an intersection with the tapered surface to the subambient pressure cavity.

11. The self-loading disc head slider of claim 10 wherein the intersection between the tapered and planar surfaces of the cavity dam trails the intersection between the tapered and bearing surfaces of the first and second raised side rails by approximately 2.54 µm.
